# EUROPEAN PATENT APPLICATION

(11) **EP 4 674 823 A1**
(43) Date of publication of application: **07.01.2026**
(21) Application number: 24763559.2
(22) Date of filing: 08.02.2024
(51) Int. Cl.: C03C 27/12, B60J 1/00, C03C 23/00

(54) **LAMINATED GLASS FOR AUTOMOBILE WINDOW AND AUTOMOBILE**

(30) Priority: 02.03.2023 JP 2023032021
(71) Applicant: AGC INC., Chiyoda-ku, Tokyo 1008405 (JP)
(72) Inventor: SHIBATA, Akihiro, Tokyo 100-8405 (JP); SAITO, Isao, Tokyo 100-8405 (JP); YAHAGI, Koki, Tokyo 100-8405 (JP)
(74) Representative: TBK
(86) International application number: PCT/JP2024/004282
(87) International publication number: WO 2024/181075

(57) **Abstract**

A laminated glass for an automobile, includes, in this order from a vehicle outer side to a vehicle inner side, a first glass plate, an interlayer film, and a second glass plate, wherein plural deformations parts are provided, at an interval in a planar direction, at a vehicle inner side surface of the first glass plate and/or the second glass plate, the deformation part includes a recess and a fissure formed peripherally to the recess, and a value of a ratio of a depth of the recess to a diameter of the recess at the surface is 2 or less.

## Description

### Technical Field

The present invention relates to a laminated glass for an automobile window and to an automobile.

### Background Art

There is demand for a technique that can reduce the impact on people at the time of a collision between an automobile and a person such as a pedestrian. For example, Patent Document 1 describes a technique in which, when an impact is applied to a cowl louver and the surroundings of a windshield, the rear end part of the cowl louver and the front end part of the windshield, which are connected by molding, are separated, reducing the impact on people.

### Prior Art Documents

### Patent Documents

Patent Document 1: Japanese Patent Application Laid-open No. 2017-213928

### SUMMARY OF THE INVENTION

### Technical Problem

Laminated glass for automobile windows such as windshields is required to break appropriately in order to reduce the impact on people in the event of a collision between an automobile and a person such as a pedestrian. For example, laminated glass for automobile windows is required to have a Head Injury Criterion (HIC) value that is equal to or lower than a desired value. Further, laminated glass for automobile windows is also required to enable automobile occupants to see outside the automobile through the laminated glass for automobile windows.

An object of an aspect of the present invention is to reduce the impact on a person when an automobile collides with the person, without impeding the ability of an automobile occupant to see outside the automobile.

### Means for Solving the Problem

An aspect of the present invention is a laminated glass for an automobile window, including, in this order from a vehicle outer side to a vehicle inner side, a first glass plate, an interlayer film, and a second glass plate, wherein plural deformation parts are provided, at an interval in a planar direction, at a vehicle inner side surface of the first glass plate and/or the second glass plate, the deformation part includes a recess and a fissure formed peripherally to the recess, and a value of a ratio of a depth of the recess to a diameter of the recess at the surface is 2 or less.

### Effect of the Invention

According to the aspect of the present invention, it is possible to provide a technique that reduces the impact on a person when an automobile collides with the person, without impeding the ability of an automobile occupant to see outside the automobile.

### BRIEF DESCRIPTION OF DRAWINGS

Fig. 1 is a front view of an automobile equipped with laminated glass according to an embodiment of the present invention.
Fig. 2 is a cross-sectional view of the laminated glass illustrated in Fig. 1, being a diagram for illustrating a breakage of the laminated glass at the time of a collision between an automobile and a person.
Fig. 3 is a plan view of the laminated glass illustrated in Fig. 1 as viewed from the side of the vehicle interior.
Fig. 4 is a cross-sectional view of line A-A in Fig. 3.
Fig. 5A is an enlarged view of a portion B including one deformation part of Fig. 3, and Fig. 5B is a cross-sectional view of line C-C in Fig. 5A.
Figs. 6A and 6B are diagrams for explaining an effect of a deformation part according to an embodiment of the present invention, wherein Fig. 6A is a partial cross-sectional view of a laminated glass 1' according to a conventional technique, and Fig. 6B is a partial cross-sectional view of the laminated glass 1 according to one embodiment of the present invention.
Figs. 7A to 7C are diagrams illustrating modified examples of a deformation part.
Fig. 8 is a schematic diagram of a processing device for processing a deformation part.
Fig. 9 is a photographed image of a deformation part formed in Example 1.
Fig. 10 is a photographed image of a deformation part formed in Example 2.
Fig. 11 is a photographed image of a deformation part formed in Example 3 and a diagram illustrating a contour shape of a recess cross section.
Fig. 12 is a photographed image of a deformation part formed in Example 4.
Fig. 13 is a photographed image of a deformation part formed in Example 6.

### DESCRIPTION OF EMBODIMENTS

Hereinafter, an embodiment is explained with reference to the drawings. Similar or corresponding configurations in the respective drawings are denoted by the same reference numerals, and description thereof may be omitted.

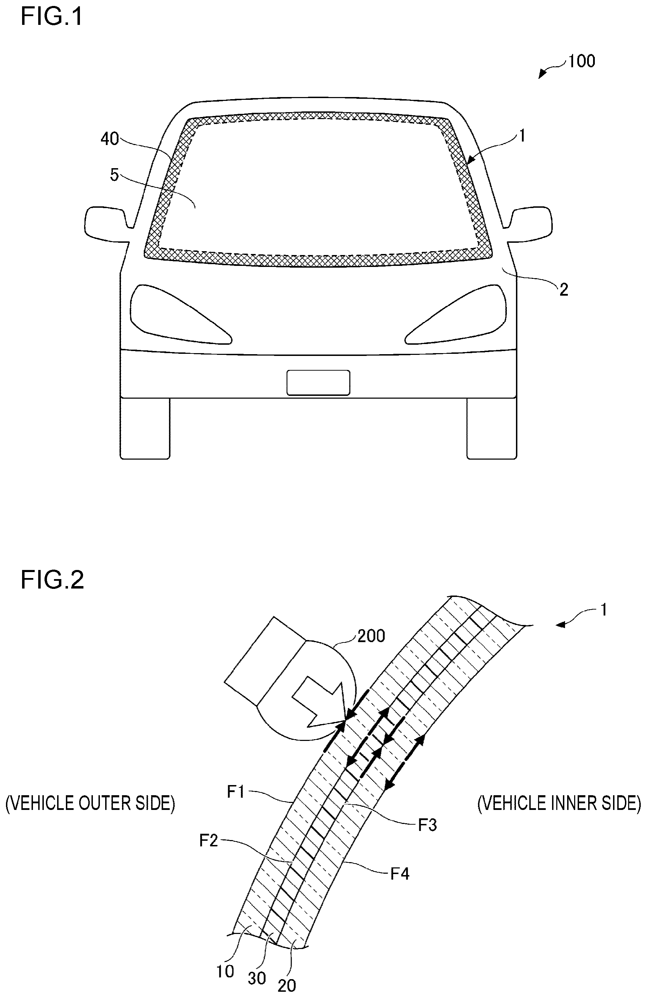

Fig. 1 illustrates an example in which a laminated glass 1 for an automobile window manufactured according to an embodiment of the present invention is used as a window glass of an automobile 100. In the example of Fig. 1, a laminated glass 1 for an automobile window (hereinafter also simply referred to as a laminated glass 1) is glass installed in an opening (window) at the front of a vehicle body 2 of an automobile 100; that is, a front windshield. The laminated glass 1 may also be used as a window glass other than a front windshield, such as a side glass, a rear glass, or a roof glass.

Fig. 2 illustrates a partial cross-sectional view of the laminated glass 1 illustrated in Fig. 1. As illustrated in Fig. 2, the laminated glass 1 includes a first glass plate 10, an interlayer film 30, and a second glass plate 20, arranged in this order from the vehicle outer side to the vehicle inner side. The first glass plate 10 and the second glass plate 20 are joined together by the interlayer film 30. The first glass plate 10 has a first face F1 that is a face at the vehicle outer side, and a second face F2 that is a face at the vehicle inner side. The second glass plate 20 has a third face F3 that is a face at the vehicle outer side, and a fourth face F4 that is a face at the vehicle inner side.

The material configuring the first glass plate 10 and the second glass plate 20 (hereinafter, also collectively referred to simply as the glass plates) in the laminated glass 1 is preferably inorganic glass. Examples of inorganic glass include soda lime silicate glass, aluminosilicate glass, borate glass, lithium aluminosilicate glass, and borosilicate glass. The method for forming a glass plate made of inorganic glass is not particularly limited. The glass plate is preferably one formed by, for example, a float method (float glass).

Further, the glass plates used for producing the laminated glass 1 may be unreinforced glass that has not been subjected to a strengthening treatment and is formed as a molten glass sheet and slowly cooled, or may be reinforced glass that has been subjected to a strengthening treatment. The strengthening treatment includes air-cooling treatment, chemical strengthening treatment, and the like. In a case of adopting unreinforced glass, even if the unreinforced glass breaks or cracks upon receiving an impact, since it is less likely to develop fine fissures or fissures across the entire surface, visibility may be maintained for occupants even in the event of an accident.

The first glass plate 10 and the second glass plate 20 may have the same thickness or may have different thicknesses. The thickness of the first glass plate 10 may be from 1.1 mm to 3.5 mm (inclusive). Further, the thickness of the second glass plate 20 may be from 0.5 mm to 2.3 mm (inclusive). Furthermore, the overall thickness of the laminated glass 1 may be from 2.3 mm to 8.0 mm (inclusive). The materials, manufacturing method, and the like of the first glass plate 10 and the second glass plate 20 may be the same as or different from each other.

The material of the interlayer film 30 is not particularly limited, but is preferably a thermoplastic resin. Examples of materials for the interlayer film 30 include thermoplastic resins such as plasticized polyvinyl acetal resin, plasticized polyvinyl chloride resin, saturated polyester resin, plasticized saturated polyester resin, polyurethane resin, plasticized polyurethane resin, ethylene-vinyl acetate copolymer resin, ethylene-ethyl acrylate copolymer resin, cycloolefin polymer resin, and ionomer resins. In addition, a resin composition containing the modified hydrogenated block copolymer described in Japanese Patent No. 6065221 may also be preferably used. Among these, since it has an excellent balance of properties such as transparency, weather resistance, strength, adhesive strength, penetration resistance, impact energy absorption, moisture resistance, heat insulation and sound insulation, a plasticized polyvinyl acetal resin is preferably used. The above-described thermoplastic resins may be used singly or in combination of two or more kinds. The term "plasticized" in the plasticized polyvinyl acetal resin means that the resin has been plasticized by the addition of a plasticizer. The same applies to the other plasticized resins.

The interlayer film 30 may be a resin that does not contain a plasticizer, such as an ethylene-vinyl acetate copolymer resin or the like. Examples of the polyvinyl acetal resin include a polyvinyl formal resin obtained by reacting polyvinyl alcohol (PVA) with formaldehyde, a polyvinyl acetal resin in the narrow sense obtained by reacting PVA with acetaldehyde, and a polyvinyl butyral resin (PVB) obtained by reacting PVA with n-butyl aldehyde. In particular, PVB is used as a preferred material because it has an excellent balance of properties such as transparency, weather resistance, strength, adhesive strength, penetration resistance, impact energy absorption, moisture resistance, heat insulation and sound insulation. The above-described thermoplastic resins may be used singly or in combination of two or more kinds.

The interlayer film 30 may have either a single layer structure or a multiple layer structure. The interlayer film 30 may have a function other than adhesion. For example, the interlayer film 30 may have one or more layers selected from a sound insulation layer, a colored transparent layer, an ultraviolet ray blocking layer, an infrared ray blocking layer, and the like.

From the viewpoint of adhesiveness, the thickness of the interlayer film 30 may be 0.5 mm or more. Moreover, the thickness of the interlayer film 30 may be 3 mm or less from the viewpoints of lightweightness and ease of handling. The thickness of the interlayer film 30 may be constant or may vary depending on the position.

The method of manufacturing the laminated glass 1 includes, for example, the following steps (a) to (c). (a) A first glass plate 10 and a second glass plate 20 are laminated together with an interlayer film 30 interposed therebetween to produce a laminate. (b) The laminate is placed inside a container such as a rubber bag, and the inside of the container is heated while reducing the pressure, and the first glass plate 10 and the second glass plate 20 are bonded together with the interlayer 30. The air pressure inside the container is, for example, from -100 kPa to -65 kPa with respect to atmospheric pressure. The heating temperature of the container is, for example, from 70°C to 110°C. (c) The laminate, having been taken out from the container, is heated at from 100°C to 150°C and pressure bonded at a pressure of from 0.6 MPa to 1.3 MPa. For example, an autoclave is used for the pressure bonding. A general method may be employed for the manufacturing method of the laminated glass 1, and the method does not need to include the above-described step (c).

As illustrated in Fig. 2, the laminated glass 1 may be curved so as to be convex toward the outside of the vehicle, as a whole or partially. In such a case, the first glass plate 10 and the second glass plate 20 may respectively be processed and curved to a desired predetermined curvature in one or two directions by bending formation. While the laminated glass 1 illustrated in Fig. 1 may have multiple curvatures being curved in the front-rear and vertical directions of the automobile, it may have single curvature that is curved only in the front-back direction or in the vertical direction. The radius of curvature of the laminated glass 1 may be from 200 mm to 300,000 mm (inclusive).

The first glass plate 10 and the second glass plate 20 are bent prior to the above-described step (a). The bending formation is performed in a state in which the glass is softened by heating. The heating temperature of the glass during bending formation is, for example, from 550°C to 700°C. The first glass plate 10 and the second glass plate 20 may be bent separately, or may be stacked and bent simultaneously. The bending formation may include gravity forming or press forming, or may include both.

As illustrated in Fig. 1, a shielding layer or light-shielding layer 40 may be provided at the periphery of the laminated glass 1 in order to protect a sealant or the like that adheres and holds the laminated glass 1 to and at the vehicle body. The shielding layer 40 may be formed, for example, by applying a ceramic color paste of a low brightness color such as black, gray, or brown, which includes a fusible glass frit containing a black pigment, and then firing the paste. The shielding layer 40 may be formed at the peripheral edge of one or more of the second face F2, the third face F3, and the fourth face F4 (Fig. 2), and preferably of at least one of the second face F2 or the fourth face F4 (Fig. 2), of the laminated glass 1. The shielding layer 40 may be provided as far as a position that is from 10 mm to 300 mm (inclusive) from the peripheral edge of the glass plate. In the present embodiment, an area excluding the area covered by the shielding layer 40 formed on the laminated glass (also called the light-shielding area) is a see-through area 5. The see-through area 5 is an area that allows an occupant of the automobile 100 to see outside the automobile 100. In other words, an occupant of the automobile 100 is able to see outside the vehicle through the see-through area 5.

As described above, the laminated glass 1 for automobile windows is required to break appropriately in order to reduce the impact on a person at a time of a collision between an automobile and a person such as a pedestrian or cyclist. For example, the laminated glass 1 is required to have a Head Injury Criterion (HIC) of a desired value or less (for example, 1000 or less, and preferably 650 or less).

Here, the manner of breakage of the laminated glass 1 in a case in which the laminated glass 1 collides with a person is described. As illustrated in Fig. 2, in a case in which the laminated glass 1 has collided with a person 200, the laminated glass 1 is pushed from the vehicle outer side toward the vehicle inner side. As a result, since tensile stress is generated at the second face F2, which is the face of the first glass plate 10 at the vehicle inner side, in a case in which the second face F2 has a portion that is different in quality from the average properties of the glass as a whole, or a portion that is modified or deformed (e.g., scratches, recesses, fissures, melting marks, or the like), the first glass plate 10 may break at that portion. In addition, tensile stress is also generated at the fourth face F4, which is the face of the second glass plate 20 at the vehicle inner side, and in a case in which the fourth face F4 has a portion that is different in quality from the average properties of the glass as a whole, or a portion that is modified or deformed, the second glass plate 20 may break at that portion. In this way, in a case in which an impact is applied to an automobile window from outside the car, at both the first glass plate 10 and the second glass plate 20, cracking (fracture) tends to start at the inner side of the vehicle and then progresses from the inner side to the outer side. Furthermore, since the fourth face F4 of the second glass plate 20, which is the face at the vehicle inner side, is exposed, cracking of the laminated glass 1 as a whole is particularly likely to start from the fourth face F4.

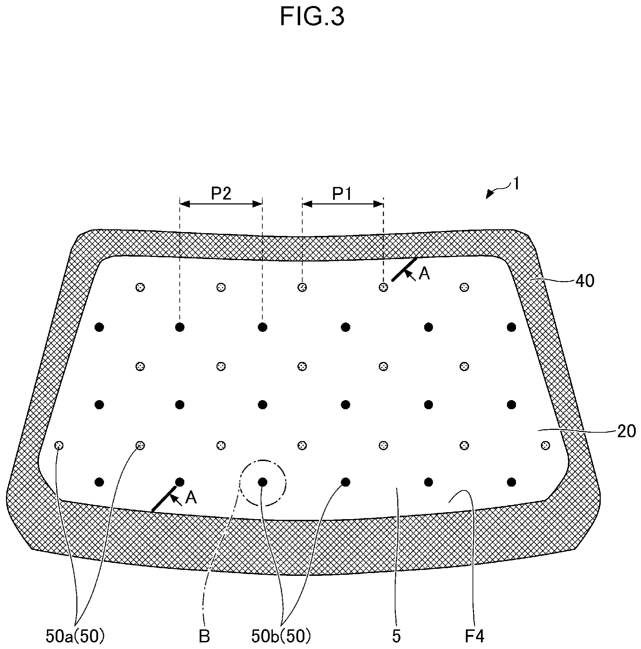

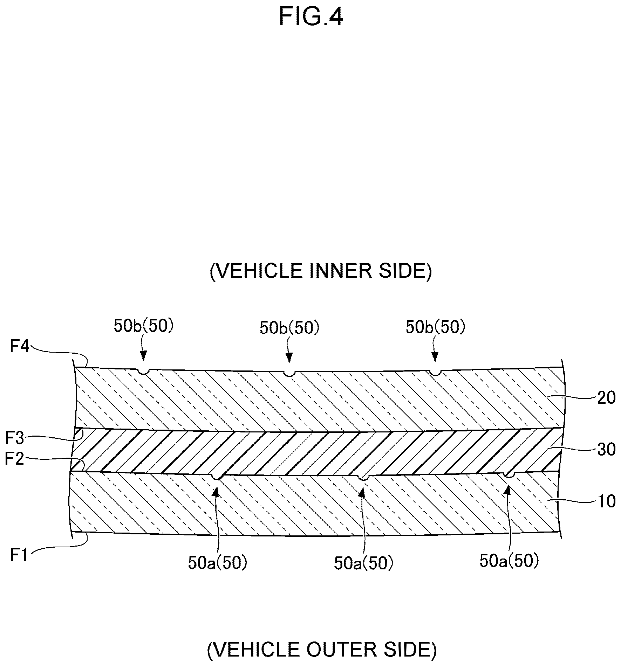

Fig. 3 illustrates a plan view of the laminated glass 1 according to the present embodiment as viewed from the inside of the vehicle. Further, Fig. 4 illustrates a cross-sectional view of the laminated glass 1 along line A-A of Fig. 3. Figs. 3 and 4 illustrate plural deformation parts 50 formed in the laminated glass 1 (details of the shapes of the deformation parts are not illustrated in Figs. 3 and 4). The deformation part 50 refers to a minute region where the surface shape of the glass plate has been changed; more specifically, to a minute region where the surface of the glass plate has been changed to form a portion that is depressed below the original surface level. As illustrated in Fig. 3, the deformation parts 50 are dispersed throughout the laminated glass 1, preferably in the see-through area 5, and are spaced apart from one another in the planar direction. In this way, since the deformation parts 50, which are minute regions (the size of which is described in detail below), are spread out, it is possible to avoid obstructing the visibility of an occupant (i.e., ensuring external visibility) when the occupant looks outside the vehicle (i.e., outside the automobile) through the laminated glass 1 obtained according to the present embodiment. Further, the ease of breakage at the time of a collision may be ensured over the entire laminated glass 1.

The deformation parts (also referred to as surface deformation parts) 50 may be formed at one or more surfaces of the first glass plate 10 and the second glass plate 20 of the laminated glass. In particular, as described above, as a result of the deformation parts 50 being formed at the vehicle inner side face (second face F2) of the first glass plate 10 and/or the vehicle inner side face (fourth face F4) of the second glass plate 20, which tend to crack first when an impact is received from outside the vehicle, when a person collides with an automobile, the laminated glass 1 becomes more likely to start cracking, and the impact on the person may be effectively reduced and the person is protected. From the viewpoint of promoting this type of appropriate cracking initiation, it is preferable that the deformation parts 50 are formed at the inner side face (fourth face F4) of the second glass plate 20, at which cracking is more likely to start when an impact is received from outside the vehicle. In addition, when the deformation parts 50 are formed at both the vehicle inner side face (second face F2) of the first glass plate 10 and the vehicle inner side face (fourth face F4) of the second glass plate 20-that is, when, as illustrated in Figs. 3 and 4, the deformation parts 50 include plural first deformation parts 50a formed over the entire surface of the second face F2 of the first glass plate 10 in the planar direction, and plural second deformation parts 50b formed over the entire surface of the fourth face F4 of the second glass plate 20 in the planar direction-this is preferable because the strength of the laminated glass 1 as a whole may be appropriately reduced. In addition, since, as illustrated in Fig. 3 and Fig. 4, the plural first deformation parts 50a and the plural second deformation parts 50b are spaced apart and dispersed in the planar direction of the glass plates, the external visibility of the laminated glass 1 may also be ensured.

In the example illustrated in Figs. 3 and 4, the first deformation parts 50a and the second deformation parts 50b are respectively arranged in a lattice pattern in plan view; however, the planar direction arrangement of the deformation parts 50 is not limited to a lattice pattern and may be, for example, a zigzag (staggered) pattern. Further, when looking at the overall arrangement of the deformation parts 50 in plan view-that is, when looking at the first deformation parts 50a and the second deformation parts 50b together-the example illustrated in Fig. 3 has a zigzag (staggered) arrangement; however, this overall arrangement is not limited to a zigzag (staggered) arrangement and may be, for example, a lattice pattern.

The pitch P1 (Fig. 3) of the first deformation parts 50a may be preferably from 1 mm to 200 mm (inclusive), more preferably from 10 mm to 100 mm (inclusive), and further preferably from 20 mm to 100 mm (inclusive). The pitch P1 is the distance between the center position of one first deformation part 50a and the center position of another first deformation part 50a that is disposed closest thereto. The center position of the deformation part 50 may be the center position of a recess (described below) of the deformation part 50. The pitch P1 may be uniform over the entire see-through area 5 or may vary from place to place, and in the latter case, is taken as an average value. By setting the pitch P1 to 1 mm or more, it is possible to suppress a phenomenon whereby the first deformation parts 50a are too close to each other, compressive stress generated on the surface is continuously distributed in the planar direction, and the glass plate becomes less likely to break. Further, by setting the pitch P1 to 200 mm or less, the first deformation parts 50a, which are the starting points of cracking, are appropriately distributed on the face (second face F2) at the vehicle inner side, and when an impact is applied to the laminated glass 1 from the outside of the vehicle, the laminated glass 1 is more likely to break appropriately.

The pitch P2 of the second deformation parts 50b, similarly to the pitch P1 of the first deformation parts 50a, is preferably from 1 mm to 200 mm (inclusive), more preferably from 10 mm to 100 mm (inclusive), and yet more preferably from 20 mm to 100 mm (inclusive). The effect of setting the pitch P2 of the second deformation parts 50b to from 1 mm to 200 mm (inclusive) is similar to the effect of the pitch P1.

In the example illustrated in Fig. 3 and Fig. 4, the first deformation parts 50a and the second deformation parts 50b do not overlap with each other in a plan view; however, the first deformation parts 50a and the second deformation parts 50b may overlap partially or entirely. Furthermore, the first deformation parts 50a and the second deformation parts 50b may be aligned in the thickness direction of the glass plates; that is, the first deformation parts 50a and the second deformation parts 50b may be arranged on a single straight line parallel to the thickness direction. It is preferable that the first deformation parts 50a and the second deformation parts 50b overlap in a plan view, because this makes it easier for a fissure to propagate in the thickness direction of the glass plate at the time of a collision between the laminated glass 1 and the person 200.

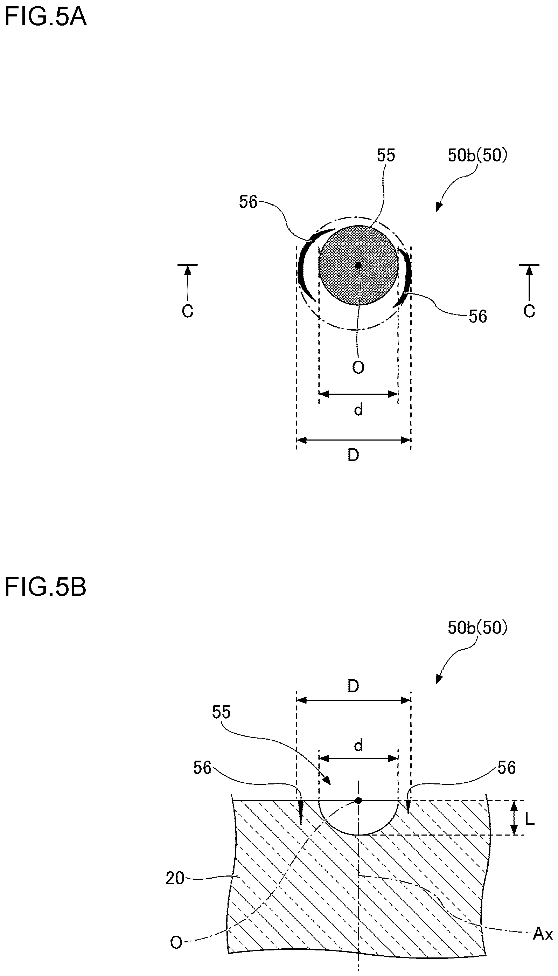

Fig. 5A illustrates an enlarged view of a portion B including one deformation part 50 (second deformation part 50b) in Fig. 3. Fig. 5B illustrates a cross-sectional view of line C-C in Fig. 5A. It should be noted that the shape of the deformation part 50 in Figs. 5A and 5B is illustrated schematically for ease of explanation. As illustrated in Figs. 5A and 5B, the deformation part 50 includes a recess 55 and a fissure 56 formed peripherally to the recess 55. This kind of deformation part 50 may be formed, for example, by laser irradiation (described in detail below).

The presence of the recess 55 makes it easier to recognize the presence of the deformation part 50 during inspection or the like, and makes it easier to inspect whether or not the deformation part 50 is reliably formed in the obtained product. In addition, during the bending process for curving the glass plate, too, it is thought that stress that would close the fissure 56 escapes to the recess 55, and it is also possible to prevent the fissure 56 formed peripherally to the recess 55 from closing. Further, the fissures 56 mainly contribute to appropriately reducing the strength of the glass plate and making the glass plate appropriately susceptible to breaking upon impact. Further, the recess 55 may be a portion formed by laser ablation.

As illustrated in Fig. 5B, the recess 55 may have a predetermined depth L from the surface of the glass plate (for example, the fourth face F4 in the case of the deformation part 50b) and a predetermined diameter d. Here, the diameter d is the diameter in plan view; more specifically, it is the circle-equivalent diameter of the opening of the recess 55 at the surface. That is, it is the diameter of a circle having the same area as the area of the recess 55 at the surface. As illustrated in the schematic diagram of Fig. 5A, in a case in which the shape of the recess 55 in plan view is circular, the diameter d is the diameter of the recess 55; however, the shape of the recess 55 in plan view is not necessarily circular, and the diameter d may be calculated by obtaining the area of the opening of the recess 55. Further, the depth L is the distance from the surface of the glass plate to the deepest position of the recess 55. In the schematic diagram illustrated in Fig. 5B, the cross sectional shape of the recess 55 cut in the thickness direction of the glass plate is a partial ellipse; however, the cross-sectional shape of the recess 55 may be rectangular or a partially rectangular shape, and a bottom surface may be formed. However, it is preferable that the profile of the cross-sectional shape of the recess 55 has a shape in which the tangent changes continuously (i.e., a curved shape without sharp corners) except for at the intersection with the glass plate surface, since this may prevent strong scattering of light at corner positions.

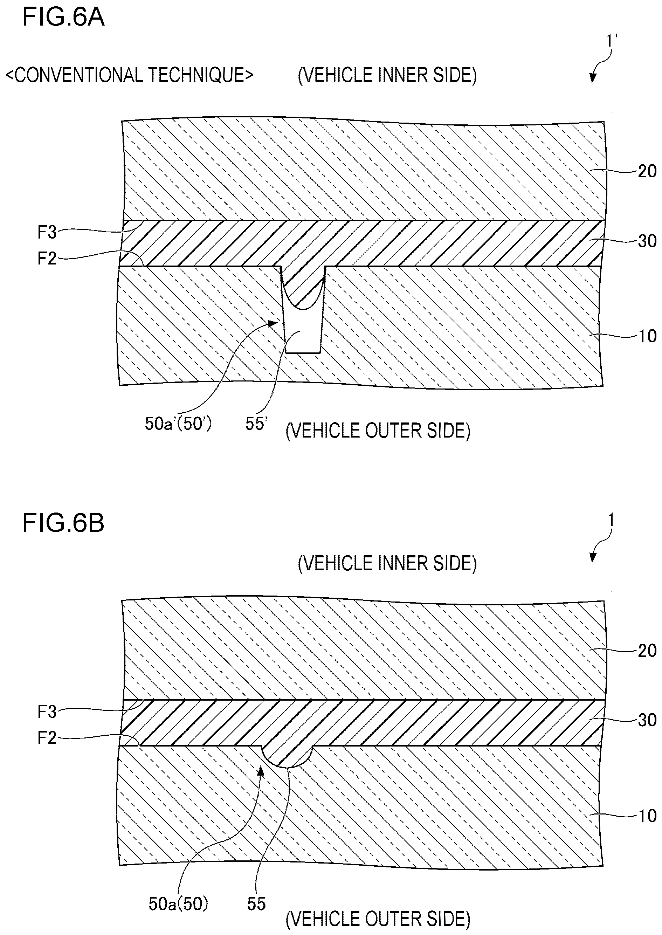

The value of the ratio (L/d) of the depth L of the recess 55 to the diameter d is 2 or less. This ensures a certain degree of size for the diameter d, making it easier to confirm the generation of the deformation part 50 during product inspection, and in the process of bending the glass sheet, stress that would close the fissure 56 is easily dissipated to the recess 55, and the fissure 56 peripheral to the recess 55 may be prevented from closing. Furthermore, as illustrated in Fig. 6B, in a case in which the recess 55 is a recess included in the first deformation portion 50a (i.e., a recess formed in the first glass plate 10), the surface at which the recess 55 is formed (the second face F2) contacts the interlayer film 30. When the value of the ratio (L/d) is 2 or less, the interlayer film 30 may penetrate into the recess 55, and it is possible to prevent a cavity from being formed between the surface of the recess 55 and the interlayer film 30, or the size of any cavity that is formed can be reduced. This mechanism is explained with reference to Figs. 6A and 6B.

Fig. 6A illustrates a partial cross-sectional view of a laminated glass 1' according to a conventional technique, and Fig. 6B illustrates a partial cross-sectional view of the laminated glass 1 according to an embodiment of the present invention. In addition, in Figs. 6A and 6B, details of the deformation part such as the fissures are omitted, and only the recess is illustrated. In the conventional laminated glass 1' illustrated in Fig. 6A, a deformation part 50' (first deformation part 50a') is formed on the vehicle inner side face (second face F2) of the first glass plate. The value of the ratio (L/d) of the depth L to the diameter d of the recess 55' included in the deformation part 50' is greater than 2. In the recess 55' having such a shape, even when a laminate formed by overlapping the first glass plate 10 and the second glass plate 20 with the interlayer film 30 therebetween is pressure-bonded under reduced pressure and/or heat (the above-mentioned manufacturing steps (b) and (c) of the laminated glass 1), it is difficult for the interlayer film 30 to penetrate all the way into the recess 55', and a cavity remains between the interlayer film 30 and the recess 55'. This kind of cavity will be noticeable in the resulting laminated glass 1 and may impair the visibility of occupants and reduce external visibility. In contrast, in the laminated glass 1 according to the embodiment of the present invention illustrated in Fig. 6B, since the interlayer film 30 may penetrate into the recess 55 and adhere closely to the surface of the recess 55, in the laminated glass 1, a cavity between the recess 55 and the interlayer film 30 is not noticeable, and the external visibility of the automobile window may be improved.

The foregoing value of the ratio (L/d) may be preferably 1 or less, more preferably 0.8 or less, and even more preferably 0.5 or less. In addition, the lower limit of (L/d) is not particularly limited, and (L/d) may be more than 0, but may be, for example, 0.05 or more, or 0.1 or more.

The diameter d of the recess 55 may preferably be from 10 µm to 200 µm (inclusive), and more preferably from 20 µm to 100 µm (inclusive). The diameter d of the recess 55 being 10 µm or more makes it easier to recognize the presence of the recess 55 during inspection or the like, and makes it easier to inspect whether or not the deformation part 50 is formed in the obtained product. In addition, by setting the diameter d of the recess 55, which occupies much of the area of the deformation part 50, to 200 µm or less, it is possible to prevent a decrease in external visibility when an occupant of the automobile 100 looks outside through the laminated glass 1.

The depth L of the recess 55 may be preferably more than 0 µm and equal to or less than 100 µm, more preferably from 1 µm to 50 µm (inclusive), and further preferably from 1 µm to 30 µm (inclusive). The depth L enhances the above-mentioned effect of preventing the fissure 56 from closing during bending. Further, by setting the depth L to 100 µm or less, particularly in a case in which the deformation part 50 is formed at the second face F2 of the first glass plate 10, the interlayer film 30 may be more easily inserted into the recess 55 (Fig. 6), and a cavity between the recess 55 and the interlayer film 30 is not noticeable, improving the visibility beyond the vehicle window. Further, the value of the ratio of the depth L to the thickness of the glass plate (L/glass plate thickness) may preferably from 0.001 to 0.1 (inclusive), and more preferably from 0.001 to 0.05 (inclusive).

In addition, in a case in which the deformation part 50 is formed at the second face F2 of the first glass plate 10 (in the case of the first deformation part 50a), it is preferable that a cavity or space is not formed between the recess 55 and the interlayer film 30, and that even if such is formed, the distance between the recess 55 and the interlayer film 30 is smaller than the wavelength of visible light.

The surface (inner surface) of the recess 55 is preferably smooth. For example, the surface roughness Ra of the surface of the recess 55 is preferably smaller than the surface roughness Ra of the second face F2 of the first glass plate 10. This allows the interlayer film 30 that has entered the recess 55 to adhere closely to the inner surface of the recess 55, further suppressing the formation of cavities. In the present specification, the surface roughness Ra is the arithmetic mean roughness Ra value obtained by stylus measurement using a surface roughness measuring instrument in accordance with JIS B 0601:1994. Furthermore, it is preferable that the surface of the recess 55 is a smooth fire polished surface. Here, a fire polished surface refers to the surface of glass that has been melted by laser irradiation and solidified by contact with air. Therefore, the fictive temperature near the surface of the recess 55 may be higher than the fictive temperature of the second face F2 in areas other than the deformation part 50.

The fissure 56 may be formed peripherally to the recess 55 as illustrated in Fig. 5A. The number of fissures 56 at one deformation part 50 may be one or more. The shape, the forming position, and the like of the fissure 56 are not particularly limited. The fissure 56 may be formed apart from the recess 55, or may be formed so as to be connected to the recess 55 and extend from the recess 55.

Moreover, in one deformation part 50, one or more fissures 56 preferably reach the surface of the glass plate. In this case, at the opening position of the recess 55 (the position of the surface of the glass plate) in plan view, it may be formed apart from the recess 55, or it may be formed so as to be connected to the recess 55 and extend from the recess 55.

In a case in which the deformation part 50 is formed by laser light irradiation, the fissure 56 reaching the surface of the glass plate as described above is easily formed by irradiating the glass plate with laser light from the side of the bottom surface (described below). Further, it is preferable that the fissure 56 is formed along the circumferential direction of the recess 55 in plan view. Further, it is preferable that the shape of the fissure 56 is an arc along the circumferential direction of the recess 55 in plan view. Furthermore, in a case in which the deformation part 50 is divided into two by an arbitrary straight line passing through the center of the deformation part 50 in plan view, it is preferable that each side includes a fissure 56.

The diameter D of an extended region of the deformation part 50 in plan view is the diameter of the smallest circle that can accommodate the recess 55 and the fissure(s) 56 peripheral thereto. The diameter D of the extended region of the deformation part 50 may preferably be from 20 µm to 200 µm (inclusive), and more preferably from 30 µm to 100 µm (inclusive). By making the diameter D 20 µm or more, the possibility that the fissure 56 will be closed during the bending process of the glass plate can be reduced, and the formation of the deformation part 50 can be easily found when inspecting the obtained product. Furthermore, owing to the diameter D being 200 µm or less, the deformation part 50 is less noticeable to the eyes of an occupant, and obstruction of an occupant's field of vision is suppressed; that is, the external visibility of the automobile window can be improved. In addition, it becomes easier to ensure robustness as a vehicle window in normal conditions. Here, the upper limit of the diameter D, 200 µm, is smaller than the size of black spots (500 µm) permitted by the Japanese Automotive Standards Organization (JASO).

The value of the ratio (D/d) of the diameter D of the extended region of the deformation part 50 to the diameter d of the recess 55 in plan view may preferably be from 1.2 to 4 (inclusive), and more preferably from 1.2 to 3 (inclusive).

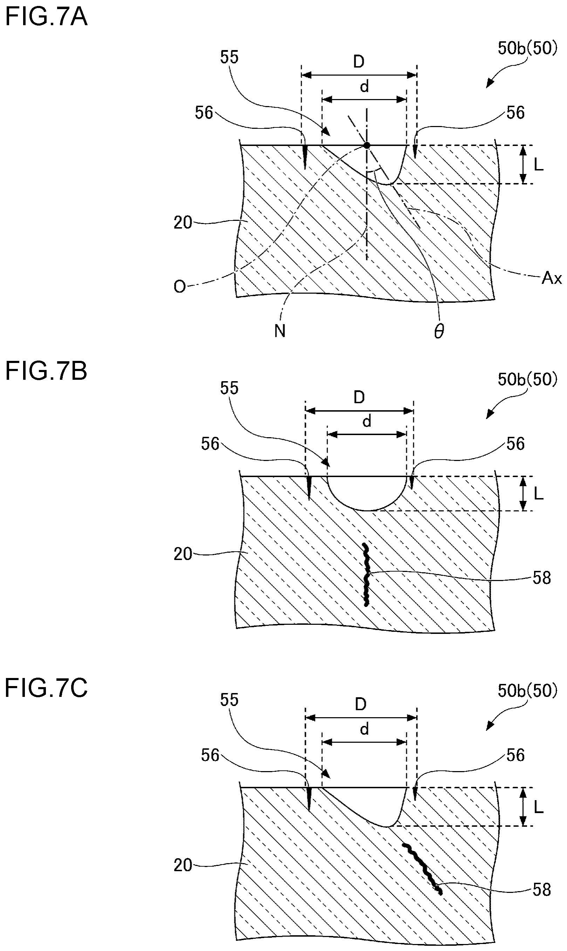

Figs. 7A to 7C illustrate modified examples of the deformation part 50 of the present embodiment. Fig. 7A is a view corresponding to Fig. 5B and illustrates a modified example of the shape of the recess 55. As illustrated in Fig. 7A, the direction of an axial line Ax of the recess 55 does not necessarily have to be parallel to the normal direction of the surface at which the recess 55 opens, and may form an angle θ of 60° or less with respect to the direction of the normal N. That is, the cross-sectional shape of the recess 55 cut in the thickness direction of the glass plate may be asymmetric with respect to a normal line N passing through the center O of the recess 55 (it may be a shape that does not have symmetry). The axial line Ax of the recess 55 is a straight line extending from the center O of the recess 55 (i.e., the center if the opening of the recess 55 is circular, or the centroid if the opening is other than circular) toward the deepest position of the recess 55. This kind of inclination of the axial line Ax of the recess 55 with respect to the normal N corresponds to an inclination of the direction of laser irradiation with respect to the normal N in a case in which the deformation part 50 is formed by laser irradiation.

Furthermore, the directions of the axial lines Ax of the recesses 55 in multiple deformation parts 50 may have a distribution. That is, the deformation parts 50 may be formed so that the axial directions of multiple recesses 55 form various angles with respect to the normal direction. For example, the angle of the axial direction relative to the normal of the recess 55 in one deformation part 50 may be different from the angle of the axial direction relative to the normal in the recess 55 in an adjacent deformation portion 50. This allows different directions in which light refracts and scatters to be mixed within the plane of the glass plate, thereby preventing plural recesses 55 from being simultaneously visible to an occupant. This kind of difference in the inclination of the axial directions of the recesses 55 may be obtained by forming plural recesses 55 while changing the irradiation direction of the laser. Furthermore, by using a processing device that combines a galvanometer scanner and a laser, it becomes easier to control the direction of irradiation.

Furthermore, as illustrated in Figs. 7B and 7C, a linear fissure (hereinafter, also referred to as an internal linear fissure 58) spaced apart from the deformation part 50 may be formed inside the glass plate. Fig. 7B illustrates a configuration in which an internal linear fissure 58 is formed at a recess 55 having an axial line Ax that is a normal line passing through the center O of the recess 55 as illustrated in Fig. 5B. Fig. 7C illustrates a configuration in which an internal linear fissure 58 is formed at a recess 55 having an axial line Ax inclined with respect to the normal line N as illustrated in Fig. 7A. As illustrated in Figs. 7B and 7C, the internal linear fissure 58 may be aligned with the axial line Ax of the recess 55. The internal linear fissure 58 makes the glass plate, and thus the resulting laminated glass 1, more likely to break appropriately in the event of a collision, thereby enabling the effect of reducing the impact on people to be improved.

Here, the length of the internal linear fissure 58 may be from 100 µm to 1000 µm (inclusive). Setting the length of the internal linear fissure 58 to the above-described range promotes appropriate cracking of the laminated glass 1 in the event of a collision, while also ensuring robustness as a vehicle window under normal conditions.

The shape of the deformation part 50, the diameter d of the recess 55, the depth L, (L/d), the diameter D of the extended region in plan view, and other dimensions of the deformation part 50 may be the same or different in the first deformation portion 50a and the second deformation portion 50b.

In a case in which the glass plates 10 and 20 configuring the laminated glass 1 are float glass, the deformation part 50 is preferably formed at, of the two main surfaces of the glass plate 10, a surface that contacted a molten metal, such as molten tin or molten tin alloy, during production (hereinafter referred to as the bottom surface). This point is explained below.

The float method is a method in which molten glass is shaped by floating it on a molten metal such as molten tin in a float bath. Here, the bottom surface that contacted the molten tin contains tin in the vicinity of the surface, while the top surface, which is the main surface at the opposite side from the bottom surface and which did not contact the molten tin, contains almost no tin. At the top surface, which contains almost no tin, an ion exchange reaction between the sodium ions in the glass and the hydrogen ions in the outside air proceeds, and a surface hydration layer is gradually formed. Because the surface hydration layer has low hardness, the top surface becomes less brittle over time, making it less susceptible to the generation and growth of fissures. For this reason, even if the deformation part 50 is formed at the top surface, the fracture strength will increase over time. As a result, when a person such as a pedestrian is hit by an automobile, it becomes difficult for cracking of the laminated glass 1 to be initiated, and there may be cases in which the function of protecting the person is insufficient. In contrast, at the bottom surface containing tin, since the ion exchange reaction between hydrogen ions and sodium ions is inhibited by the effect of tin, which is an asymmetric ion, the formation of a surface hydration layer is inhibited. Therefore, by forming the deformation part 50 at the bottom surface, the fracture strength is less likely to change over time, and the function of protecting a person is maintained for a long period of time.

In view of the foregoing, in the present embodiment, it is desirable to form the deformation part 50 at the bottom surface, which contains a larger amount of tin. Further, in the manufacture of the laminated glass 1, the glass plates 10, 20 are preferably arranged such that their respective surfaces at the vehicle inner side (i.e., the second face F2 and the fourth face F4) are the bottom surfaces. Further, at the bottom surface, which contains a larger amount of metal such as tin, light absorption is significantly improved, particularly in the UV region. Therefore, in a case in which the deformation part 50 is formed by laser irradiation, there is the advantage that the processing can be performed with lower energy irradiation.

The bottom surface containing a larger amount of tin and the top surface containing almost no tin may be distinguished, for example, by measuring the tin concentration at both faces using a tin surface measuring device TinCheck manufactured by Bohle AG. Further, at the bottom surface, a tin-containing layer having a thickness of 5 to 15 µm may be detected by quantitatively measuring the tin concentration using a fluorescent X-ray method or an EPMA method.

In a case in which the distribution of the strength (fracture stress) (the calculation method is described below) of the surface at the vehicle inner side (i.e., the second face F2 and/or the fourth face F4) of the glass plate at which the deformation part 50 is formed, in the laminated glass 1 obtained according to the present embodiment, is determined, the maximum value may preferably be 350 MPa or less, and more preferably 250 MPa or less. Further, the minimum value may preferably be 60 MPa or more, and more preferably 80 MPa or more. When the maximum value is 350 MPa or less, it becomes easier for the laminated glass 1 to be appropriately broken at a time of collision, and the effect of reducing the impact on people can be improved. When the minimum value is 60 MPa or more, breakage of the laminated glass 1 caused by flying stones can be suppressed.

Further, in the laminated glass 1 according to the present embodiment, at least in the see-through area 5, the arithmetic mean roughness Ra of the roughness curve as defined in JIS B 0601-2013 of the second face F2 of the first glass plate 10 and the fourth face F4 of the second glass plate 20 may be from 0.1 nm to 1000 nm (inclusive).

The method for forming the deformation part 50 is not particularly limited, and there are methods using a laser, electron beam irradiation, mechanical processing, or the like; however, among these, a method using laser light irradiation is preferable. Since laser light has high directivity or convergence, making it possible to irradiate with a small spot diameter (diameter at the focused position), by locally heating a very small area, the deformation part 50 may be formed with precise size and placement.

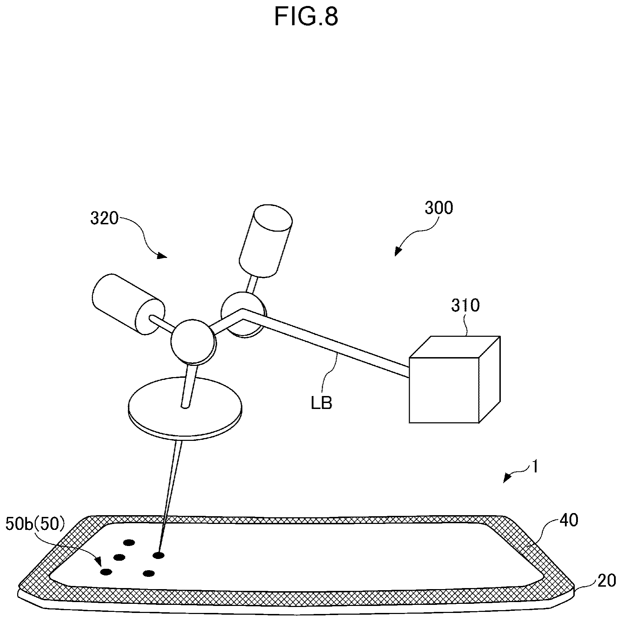

Fig. 8 schematically illustrates a processing device 300 for forming the deformation part 50. The processing device 300 may include a laser light irradiation device 310 and a scanning device 320. The scanning device 320 may be a galvanometer scanner, a polygon scanner, or the like. The orientation of the laser beam LB emitted from the laser beam irradiation device 310 may be adjusted by the scanning device 320. As a result of this, the orientation of the laser light LB may be changed arbitrarily in three dimensions, and even in the case of a curved glass plate, for example, the laser light LB may be more reliably irradiated at a desired position on the main surface of the glass plate at a desired angle.

In the example illustrated in Fig. 8, the laser beam LB is irradiated from the vehicle inner side (i.e., from the side of the fourth face F4) of the second glass plate 20 configuring the laminated glass 1; however, the deformation part 50 may be formed at the surface at the vehicle inner side by irradiating the second glass plate 20 with laser light from outside the vehicle (i.e., the side of the third face F3). In this case, the irradiation conditions may be set so as to achieve focus on the surface at the vehicle inner side of the glass plate.

In the manufacturing process of the laminated glass 1, the irradiation with the laser beam LB may be carried out at a stage before the glass plates 10, 20 are laminated (i.e., before the above-described step (a)). That is, the laminate may be constructed with the interlayer film 30 interposed therebetween after the deformation part 50 is formed at the surface at the vehicle inner side of the first glass plate 10 and/or the second glass plate 20. Alternatively, if the deformation part 50 to be formed is the second deformation part 50b, the laminated glass 1 may be irradiated with the laser light LB from the vehicle inner side after the laminated glass 1 is constructed.

In the irradiation of the laser light LB, either nonlinear absorption or linear absorption may be utilized. When nonlinear absorption is used, the photon density may be from 1×10⁸ W/cm² to 1 x 10¹⁴ W/cm² (inclusive), In nonlinear absorption, multiphoton absorption occurs. The probability of multiphoton absorption occurring increases dramatically as the photon density increases in nonlinear absorption. For example, the probability that two-photon absorption occurs is proportional to the square of the photon density.

Further, in linear absorption, one-photon absorption occurs at any given position in the thickness direction of the glass plate, depending on the photon density. One-photon absorption is proportional to the photon density. Further, the intensity of the laser light LB attenuates in accordance with Lambert-Beer's law. That is, if the intensity of the laser beam LB has changed from I₀ to I while the laser beam LB moves by a distance E (unit: cm) in the glass plate, the absorption coefficient of the glass plate is α (unit: cm⁻¹]), and I = I₀×exp(-α×E) holds true. From the viewpoint of absorbing the laser light LB inside the glass plate, it is preferable to irradiate a glass plate having an absorption coefficient α greater than 0 and less than 100 with the laser light LB. In the case of linear absorption, even if the glass plate is, for example, colored, it is easy to control the size and shape of the deformation part 50 by appropriately selecting the absorption coefficient α. Further, in a case in which linear absorption is used, it is easy to form the deformation part 50 (the recess 55 and the fissure 56) so as to appear on the surface.

While the conditions for the laser beam LB irradiation vary depending on the composition and the like of the glass plates included in the laminated glass 1, there are no particular limitations on the conditions as long as both the recess 55 and the fissure 56 peripheral thereto are formed. The wavelength of the laser light LB is preferably a wavelength that is at least partially transmissible. More specifically, the wavelength of the laser light LB may be from 250 nm to 5000 nm (inclusive), and may preferably be from 310 nm to 3000 nm (inclusive). At wavelengths in the above-described ranges, the absorption coefficient α can be set in an appropriate range.

Examples of the light source of the laser light include near-infrared lasers such as Yb fiber lasers (wavelength: from 1000 nm to 1100 nm (inclusive)), Yb disk lasers (wavelength: from 1000 nm to 1100 nm (inclusive)), Nd:YAG lasers (wavelength: 1064 nm), and high-power semiconductor lasers (wavelength: from 808 nm to 980 nm (inclusive)). Further, the light source of the laser light may be, for example, a UV laser (wavelength: from 310 nm to 360 nm), a green laser (wavelength: from 510 nm to 540 nm (inclusive)), a Ho:YAG laser (wavelength: 2080 nm), an Er:YAG laser (2940 nm), or a laser using a mid-infrared optical parametric oscillator (wavelength: from 2600 nm to 3450 nm (inclusive)). The laser may be a diode pumped solid state (DPSS) laser combined with a wavelength conversion element.

The laser light LB may be irradiated by pulsed oscillation or by continuous oscillation. Pulsed oscillation is preferable from the viewpoint of reducing unintended damage to the vicinity of the irradiated part. While the pulse operation mode is not particularly limited, a burst pulse mode is preferable because it allows high-output irradiation and therefore shortens the irradiation time. In the case of pulsed oscillation, a nanosecond pulse laser, a picosecond pulse laser, a femtosecond pulse laser or the like may be used.

Other conditions for the laser light irradiation may be a pulse width of from 0.0001 ns to 100 ns (inclusive), a pulse energy of from 10 µJ to 1000 µJ (inclusive), a number of irradiations of from 1 to 1000 times (inclusive), and a repetition frequency of from 1 kHz to 10,000 kHz (inclusive). Further, the irradiation angle of the laser light (the angle with respect to the normal direction of the main surface of the glass plate at the irradiation position) may be set to an irradiation angle corresponding to the angle θ (Fig. 7A) of the recess 55 to be formed. The irradiation angle of the laser light and the angle θ of the recess 55 have different values owing to refraction of the laser light at the surface of the glass plate. The difference in angle may be easily calculated from the refractive index of the glass plate. The multiple deformation parts 50 on the main surface of the glass plate may be formed while changing the irradiation angle of the laser light.

One embodiment of the present invention may be a method of producing a glass plate for an automobile window, including providing deformation parts at a surface of the glass plate at a vehicle inner side, at intervals in a planar direction, wherein the deformation part includes a recess and a fissure formed peripherally to the recess, and a value of the ratio of the depth of the recess to the diameter of the recess at the surface is 2 or less.

Further, one embodiment of the present invention may be a method of producing a laminated glass plate for an automobile window, which is a method for producing a laminated glass for an automobile window including, in this order from a vehicle outer side to a vehicle inner side, a first glass plate, an interlayer film, and a second glass plate, the method including providing plural deformation parts on a surface at a vehicle inner side of the first glass plate and/or the second glass plate, wherein the deformation parts being spaced apart in a planar direction, the deformation part includes a recess and a fissure formed peripherally to the recess, and a value of the ratio of the depth of the recess to the diameter of the recess at the surface is 2 or less.

In the above-described method of producing a laminated glass for an automobile window, in a case in which the deformation part 50 is formed at both the first glass plate 10 and the second glass plate 20, after the first deformation part 50a and the second deformation part 50b are formed at the first glass plate 10 and the second glass plate 20, respectively, the first glass plate 10 and the second glass plate 20 may be laminated together with the interlayer film 30 interposed therebetween to obtain the laminated glass 1 (for example, the above-described steps (a) to (c)). Further, the deformation part 50 may be formed by irradiating both the first glass plate 10 and the second glass plate 20 with laser light after the bending process. Further, after the laminated glass 1 is obtained, the laser beam LB may be scanned over the see-through area 5 twice, for example, and the first deformation part 50a may be formed at the surface at the vehicle inner side of the first glass plate 10 during one of the scans, and the second deformation part 50b may be formed in the second glass plate 20 during the other scan. In a case in which the deformation part 50 is formed after the laminated glass 1 is obtained, the laser beam irradiation conditions-in particular, the laser wavelength-are adjusted so that the laser beam absorption rate in the first glass plate and/or the second glass plate is greater than the laser beam absorption rate in the interlayer film. According to this method, it is possible to prevent the first deformation part 50a and the second deformation part 50b from being misaligned in plan view.

Furthermore, in a case of forming the deformation part 50 after obtaining the laminated glass 1, the deformation part 50 may be formed at both the first glass plate 10 and the second glass plate 20 by a single scanning of the laser light LB. In this case, the laser light LB is focused at two or more different positions on the optical axis thereof-that is, both within the first glass plate 10 and within the second glass plate 20-in a single scanning operation. Specifically, it is preferable to condense and irradiate the laser light LB using a multifocal lens or a multifocal diffractive optical element. This makes it possible to reduce the time required for scanning with the laser light LB. This method is suitable for obtaining a configuration in which the first deformation part 50a and the second deformation part 50b are disposed so as to overlap each other in plan view.

In the above-described method of producing a laminated glass for an automobile window, the laser may be irradiated after the process of bending the first glass plate and the second glass plate. As a result, it is possible to prevent the shape and size of the deformation part 50 from changing during the bending process, and thus to prevent a change in function.

### [Examples]

Experimental data is explained below. In the following experimental examples, Examples 1 to 4 are working examples, and Examples 5 and 6 are comparative examples.

### <Preparation of samples for fracture stress measurement>

### (Example 1)

In the same manner as in a normal mass production process, a glass sample (100 mm x 100 mm x 2 mm thick) was cut out from a glass plate having a soda lime silicate glass composition obtained by the float method, and the glass sample was irradiated with laser light from the bottom surface side at one location at the center of the surface. As a result, one deformation part was formed at the center of the bottom surface of the glass sample. Table 1 shows the laser irradiation conditions. Among the irradiation conditions, the "number of irradiations" is the number of times the laser is irradiated. The "irradiation angle" is the angle with respect to the normal direction of the bottom surface of the glass plate at the irradiation position. An irradiation angle of 0° means that irradiation is performed in the normal direction of the irradiation surface (bottom surface). In Example 1, all of the deformation parts were formed by laser irradiation at an irradiation angle of 0°.

The laser processing device used for the laser irradiation is configured by a laser light irradiation device (LD excited solid-state laser) and a galvanometer scanner, which is a scanning device. While the laser processing device itself is fixed in position, a device capable of irradiating the laser beam at various angles is used. The aperture ratio and working distance of the lens were set such that the spot diameter of the laser light at the surface of the glass plate was 32 µm in terms of 1/e² diameter.

The glass sample after the laser irradiation was placed in an electric heating furnace and subjected to a heat treatment at 658 °C for 200 seconds, which is the same heat treatment as that used in a typical bending process.

### (Examples 2 to 4)

Glass samples of Examples 2 to 4 were obtained in the same manner as in Example 1, except that the laser irradiation conditions were changed as shown in Table 1. In Example 3, the deformation part was formed by laser irradiation at an irradiation angle of 28.00°. While it could be confirmed that internal linear fissures were formed in the samples of Examples 2 and 3, no internal linear fissures were formed in the sample of Example 4.

### (Example 5)

A glass sample was obtained in the same manner as in Example 1, except that laser irradiation was not performed.

### (Example 6)

A glass sample of Example 6 was obtained in the same manner as in Example 1, except that the laser irradiation conditions were changed as shown in Table 1. In the sample of Example 6, no fissures were formed peripherally to the recesses, and nor were any internal linear fissures formed.

The focal depth has an effect on the generation of internal linear fissures. The focal depth is proportional to the square of the spot diameter of the laser light and inversely proportional to the wavelength of the laser light. In Examples 1 to 3, since the spot diameter was large at 32 to 53 µm, the wavelength was short at 355 nm, and the focal depth was long, the laser light reached the inside of the glass sample and an internal linear fissure was formed. In contrast, in Examples 4 and 6, since the spot diameter was small at 14 µm, the wavelength was long at 1064 nm, and the focal depth was short, it was difficult for the laser light to reach the inside of the glass sample, and no internal linear fissure was formed.

### <Measurement of the size and the like of the deformation part>

The deformation part formed at the bottom surface of the glass sample in each example was photographed from the bottom surface side at which the deformation part was formed, using a digital microscope VHX-6000 manufactured by Keyence Corporation. Based on the captured images, the diameter D of the extended region of the deformation part and the diameter d of the recess in plan view were determined. Furthermore, the profile of the recess in cross section cut in the thickness direction of the glass plate was determined by one-dimensional analysis using a laser microscope VK-X3000 manufactured by Keyence Corporation, and the depth L of the recess was determined based on this analysis. The length of the internal linear fissure was measured using a digital microscope VHX-6000 manufactured by Keyence Corporation. The results are shown in Table 1.

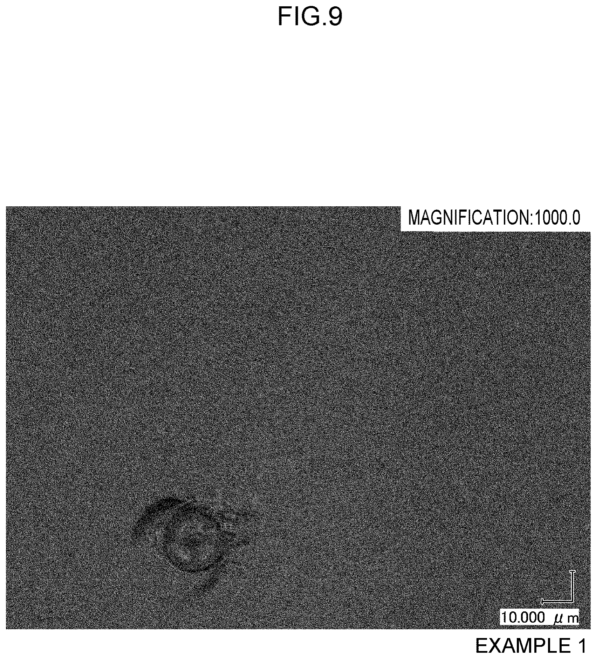

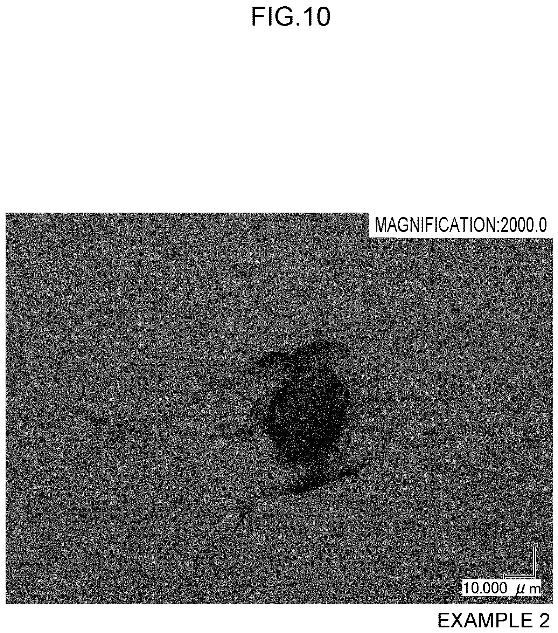

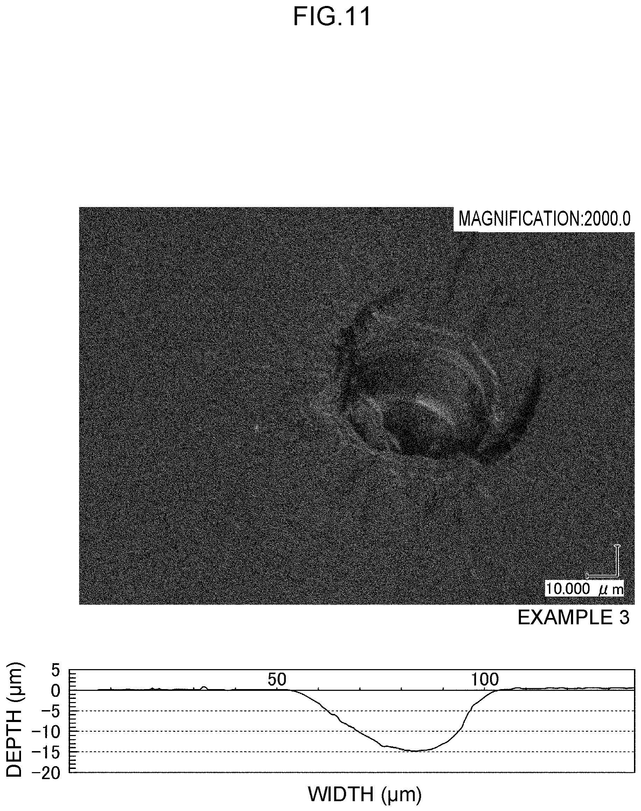

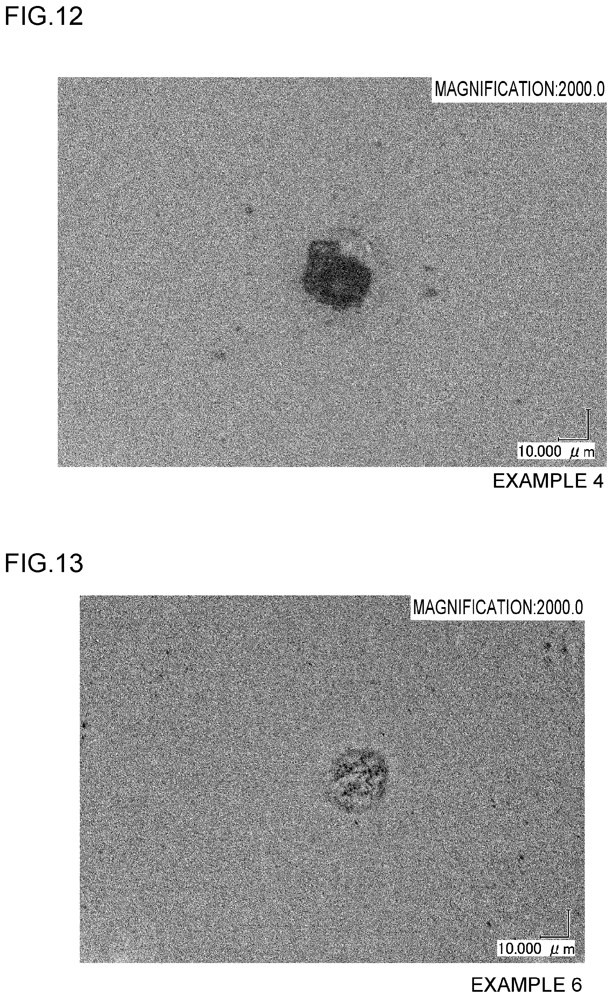

Further, Figs. 9 to 13 (in Fig. 11, the upper part) show photographed images (1000x magnification for Example 1, 2000x magnification for Examples 2 to 4 and 6) of a deformation part in the glass samples of Examples 1 to 4 and 6, respectively. Further, the lower part of Fig. 11 shows the analysis results of the profile of the recess in Example 3.

### <Measurement of strength (fracture stress)>

Ten glass samples (100 mm×100 mm×thickness 2 mm) produced as described above were prepared, and the strength of each glass sample was measured as fracture stress (MPa). The fracture stress was measured in accordance with ISO 1288-5 (2016) using R30. Specifically, a support ring having a diameter of 60 mm and a load ring having a diameter of 12 mm were used, and a load was applied by the load ring at a load rate of 0.3 mm per minute to measure the breaking load. The load was applied from the top surface side by placing a load ring on the top surface side of the glass plate. Furthermore, the fracture stress was calculated using the formula described in ISO1288-5

(2016). The results are shown in Table 1.

From the strength data of the above-described 10 glass samples, the maximum and minimum values were recorded, and the average value was calculated and recorded.

As shown in Table 1, in Examples 1 to 4 in which a deformation part including a recess and a fissure formed peripherally to the recess was provided, the maximum value of the fracture stress was 350 MPa or less, and the minimum value was 60 MPa or more. Further, in Examples 5 and 6 in which a deformation part including a recess and a fissure formed peripherally to the recess was not provided, the maximum value of the fracture stress exceeded 350 MPa. Furthermore, in Examples 1 to 3 in which internal linear fissures were generated, compared with Example 4 in which an internal linear fissure was not generated, it was found that the maximum value of the fracture stress was approximately 30 MPa lower, which makes it easier for the glass plate to break appropriately at a time of impact.

### <Preparing a sample for evaluating external visibility>

A glass sample (300 mm x 300 mm x 2 mm thick) was cut out from a glass plate having a soda lime silicate glass composition obtained by the float method, and laser irradiation was performed from the bottom surface side. Irradiation was performed intermittently at 81 locations dispersed in a square lattice pattern at a pitch of 30 mm. The laser irradiation conditions are as shown in Table 1. After the laser irradiation, the glass sample was placed in an electric heating furnace, and as a heat treatment equivalent to a commonly performed bending process, heat treatment was performed at 658° C for 200 seconds.

Two glass samples that had been subjected to the laser irradiation and heat treatment were disposed with the orientation of their bottom surfaces aligned (so that the bottom surfaces of both glass samples faced upwards), and the plates were laminated with an interlayer film (PVB resin) therebetween and pressed together to form a laminated glass. A laminated glass sample was obtained in which a glass sample having a thickness of 2 mm, an interlayer film having a thickness of 0.76 mm, and a glass sample having a thickness of 2 mm were laminated.

### <External visibility evaluation>

The obtained laminated glass was placed with the vehicle inner side surface of the glass plate, which would be at the inner side of the vehicle, facing the face of the evaluator at a position separated therefrom by 400 mm, and the visibility of an image at the opposite side of the laminated glass (outside the vehicle) as viewed under natural light was evaluated. The evaluation criteria were as follows.
⊚: No bright spots are visible
∘: There are some areas where bright spots are slightly visible.
△: Periodic bright spots are weakly visible throughout the image
×: Periodic bright spots are strongly visible throughout the image.
The evaluation results for each example are shown in Table 1.

**[Table 1]**

| | Laser Irradiation Conditions | | | | | | | Attributes of Deformation Part | | | | | | Fracture stress | | | Visibility |
|---|---|---|---|---|---|---|---|---|---|---|---|---|---|---|---|---|---|
| | Wave length [nm] | Pulse width [ns] | Spot diameter [µm] | Pulse energy [µJ] | Number of irradiations | Repetition frequency [kHz] | Irradiation angle [deg] | Fissure extended region diameter D [µm] | Recess diameter d [µm] | Recess depth L [µm] | L/d | Internal linear fissure length [µm] | Angle 0 [deg] | Maximum value [MPa] | Minimum value [MPa] | Average value (N10) [MPa] | |
| Examp le 1 | 355 | 20 | 32 | 120 | 8 | 75 | 0 | 34 | 23.8 | 9.8 | 0.41 | 585 | 0 | 115 | 98 | 105 | ⊚ |
| Examp le 2 | 355 | 20 | 32 | 80 | 20 | 40 | 0 | 41 | 26.1 | 10.8 | 0.41 | 539 | 0 | 108 | 89 | 102 | ⊚ |
| Examp le 3 | 355 | 20 | 53 | 130 | 40 | 40 | 28.00 | 69 | 51.8 | 14.8 | 0.29 | 524 | 17.78 | 112 | 99 | 105 | ⊚ |
| Examp le 4 | 1064 | 0.00023 | 14 | 30 | 10 | 75 | 0 | 26.7 | 11.1 | 3.3 | 0.30 | - | 0 | 144 | 125 | 140 | ⊚ |
| Examp le 5 | - | - | - | - | - | - | - | - | - | - | - | - | - | 475 | 128 | 248 | ⊚ |
| Examp le 6 | 1064 | 0.00023 | 14 | 30 | 1 | 75 | 0 | - | 25.3 | 0.13 | 0.01 | - | 0 | 392 | 133 | 221 | ⊚ |

According to the foregoing, it was found that it is possible to provide a technique such that a laminated glass for an automobile window in which plural deformation parts of Examples 1 to 4 are provided at intervals in the planar direction at the vehicle inner side surface of the first glass plate and/or the second glass plate reduces the impact on a person at the time of a collision between an automobile and the person, without impeding the ability of an automobile occupant to see outside the automobile.

The present application claims priority based on Japanese Patent Application No. 2023-032021, filed on March 2, 2023, the entire contents of which are incorporated herein by reference.

### Explanation of the Reference Symbols

- 1: Laminated glass
- 2: Vehicle body
- 5: See-through area
- 10: First glass plate
- 20: Second glass plate
- 30: Interlayer film
- 40: Shielding layer
- 50, 50': Deformation part
- 50a, 50a': First deformation part
- 50b: Second deformation part
- 55, 55': Recess
- 56: Fissure
- 58: Internal linear fissure
- 100: Automobile
- 200: Person
- 300: Processing device
- 310: Laser light irradiation device
- 320: Scanning device
- F1: First face
- F2: Second face
- F3: Third face
- F4: Fourth face
- LB: Laser light

## Claims

1. A laminated glass for an automobile, comprising, in this order from a vehicle outer side to a vehicle inner side, a first glass plate, an interlayer film, and a second glass plate,
wherein a plurality of deformation parts is provided, at an interval in a planar direction, at a vehicle inner side surface of the first glass plate and/or the second glass plate,
the deformation part includes a recess and a fissure formed peripherally to the recess, and
a value of a ratio of a depth of the recess to a diameter of the recess at the surface is 2 or less.

2. The laminated glass for an automobile of claim 1, wherein the diameter of the recess is from 10 µm to 200 µm, inclusive.

3. The laminated glass for an automobile of claim 1, wherein the depth of the recess is from 1 µm to 100 µm, inclusive.

4. The laminated glass for an automobile of claim 1, wherein a pitch of the deformation parts in the planar direction is from 1 µm to 200 µm, inclusive.

5. The laminated glass for an automobile of claim 1, wherein the fissure reaches the surface.

6. The laminated glass for an automobile of claim 1, wherein an internal linear fissure is formed at a position separated from the deformation part in a thickness direction.

7. The laminated glass for an automobile of claim 1, wherein an angle of an axial line of the plurality of deformation parts differs with respect to a normal direction.

8. The laminated glass for an automobile of claim 1, wherein:
the first glass plate and/or the second glass plate at which the deformation part is formed is float glass, and
the vehicle inner side surface of the first glass plate and/or the second glass plate is a surface that contacted a molten metal inside a float bath.

9. The laminated glass for an automobile of claim 1, wherein:
the deformation part is provided at the first glass plate and the second glass plate, and
the deformation part provided at the first glass plate and the deformation part provided at the second glass plate overlap in plan view.

10. An automobile, comprising:
the laminated glass for an automobile of any one of claim 1 to claim 9; and
a vehicle body including an opening at which the laminated glass for an automobile is mounted.
